Europäisches Patentamt

European Patent Office

Office européen des brevets

(11) Numéro de publication: **0 209 457**
**B1**

(12) **FASCICULE DE BREVET EUROPEEN**

(45) Date de publication du fascicule du brevet:
**07.12.88**

(21) Numéro de dépôt: **86401547.4**

(22) Date de dépôt: **10.07.86**

(51) Int. Cl.⁴: **G 01 M 11/02**

(54) Procédé et dispositif de détermination de la qualité d'un instrument optique et notamment de sa fonction de transfert.

(30) Priorité: **10.07.85 FR 8510580**

(43) Date de publication de la demande:
**21.01.87 Bulletin 87/4**

(45) Mention de la délivrance du brevet:
**07.12.88 Bulletin 88/49**

(84) Etats contractants désignés:
**CH DE GB IT LI**

(56) Documents cités:
**GB-A- 1 601 642**

**PROGRESS IN OPTICS, vol. 5, 1966, Amsterdam, NL; K. MURATA: "Instruments for the measuring of optical transfer functions"**
**OPTICA ACTA, vol. 9, no. 1, 1961, pages 1-12, Londres, GB; A. LOHMANN: "Grating diffraction spectra as coherent light sources for two- or three-beam interferometry"**
**APPLIED OPTICS, vol. 10, no 2, février 1971, pages 264-269, New York, US; R.R. SHANNON et al.: "Paired source testing of optical systems"**
**APPLIED OPTICS, vol. 14, no. 7, juillet 1975, pages 1613-1615, New York, US; J.C. WYANT: "OTF measurements with a white light source: an interferometric technique"**

(73) Titulaire: **MATRA, 4 rue de Presbourg, F-75116 Paris (FR)**

(72) Inventeur: **Pointeau, François, 4, rue Pierre et Marie Curie, F-92160 Antony (FR)**

(74) Mandataire: **Fort, Jacques, CABINET PLASSERAUD 84, rue d'Amsterdam, F-75009 Paris (FR)**

ACTORUM AG

## Description

L'invention concerne la détermination de la qualité d'un instrument optique, et notamment la mesure de sa fonction de transfert optique, souvent désignée par l'abréviation FTO.

On sait qu'on caractérise en général la qualité d'un système optique soit par la valeur de sa fonction de transfert optique FTO, en lumière polychromatique lorsque l'instrument n'est pas prévu pour fonctionner sur une longueur d'onde particulière, soit par l'écart aberrant $\triangle$ (x, y) pour chacun des points de la pupille défini par ses coordonnées cartésiennes x et y.

Lors de la conception d'un nouvel instrument d'optique, on est amené à calculer la fonction de transfert que présentera sa formule optique. Mais il est indispensable de pouvoir déterminer, sur le système réalisé, si la qualité optique correspond bien au calcul de conception, basé sur une modélisation. On connaît déjà de nombreux procédés permettant de déterminer la qualité optique d'un instrument existant, mais tous ces procédés présentent soit des inconvénients, soit des limitations d'emploi qui les rendent inapplicables dans de nombreux cas.

On connaît des procédés d'interférométrie, qui ont notamment l'inconvénient d'être très difficiles à mettre en oeuvre en lumière polychromatique. On connaît également des procédés de mesure directe de FTM, notamment celui qui est mis en oeuvre dans l'appareil vendu par la société demanderesse sous le nom «ACOFAM». Cet apparail donne des résultats satisfaisants pour les instruments ayant des dimensions courantes, mais il nécessite un générateur et un analyseur dont les dimensions sont comparables à celles des faisceaux correspondants. Dans la pratique, cela signifie qu'un instrument de très grandes ou de très petites dimensions exigerait un générateur d'objet très particulier, puisque ce générateur doit être aux dimensions du champ objet.

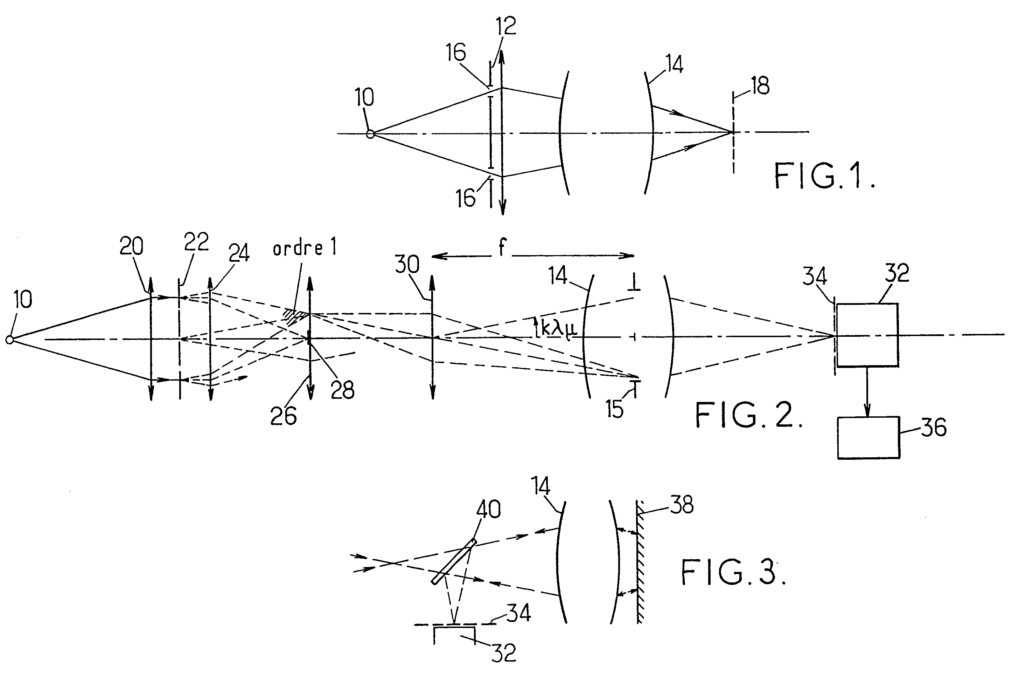

On connaît enfin les méthodes de Cotton et de Hartmann, permettant de mesurer la valeur de l'écart aberrant. Pour cela, on utilise une méthode différentielle consistant à disposer dans la pupille de l'instrument à étudier un diaphragme percé de deux ouvertures. Le montage de Cotton est celui schématisé en Figure 1. Un source 10 ponctuelle, monochromatique ou du moins ayant un spectre étroit, éclaire un diaphragme 12 placé dans la pupille de l'instrument 14 à étudier. Les sources secondaires mutuellement cohérentes constituées par les deux ouvertures 16 du diphragme 12 créent dans le plan image 18 un système de franges d'interférence. La mesure de la position du centre des franges donne une indication sur la différence d'écart aberrant entre les points de la pupille correspondant aux ouvertures du diaphragme.

La mesure est répétée pour plusieurs positions du diaphragme suivant les directions x et y et fournit, par une méthode d'accroissements finis, une carte des pentes de la surface d'onde.

Le montage qui vient d'être décrit apparaît comme directement lié à l'optique géométrique, alors que la fonction de transfert optique est liée à la diffraction, c'est-à-dire à des phénomènes d'optique ondulatoire. Il est difficile et laborieux de remonter des pentes de la surface d'onde à la fonction de transfert optique, car il faut effectuer une intégration qui est d'autant moins rigoureuse que l'on travaille sur des accroissements finis.

L'invention vise à fournir un procédé et une disposif susceptibles de fournir, directement et non pas par l'intermédiaire de l'écart aberrant, la fonction de transfert optique d'un instrument, sans qu'il soit nécessaire d'utiliser un générateur d'objet aux dimensions du champ objet. Pour cela, l'invention part de la constatation qu'il est possible d'utiliser de façon complémentaire des notions d'optique géométrique et d'optique ondulatoire et, en particulier, de transposer les notions représentées par l'intégrale de Duffieux à la détermination de la fonction de transfert à partir de la variation de l'amplitude complexe a (x, y) en fonction des coordonnées (x, y) dans la pupille, à condition de conserver une ouverture modérée, et la possibilité de reconstituer la fonction de transfert normalisée ou FTN (définie en éclairage spatialement incohérent) à partir de mesures effectuées de façon inhérente depuis une source spatialement cohérente.

L'invention propose en conséquence un procédé de mesure de la qualité optique d'un instrument et notamment de sa fonction de transfert optique, suivant lequel on découpe dans la pupille d'entrée de l'instrument deux zones distinctes, et on mesure la position des franges dans l'image fournie par l'instrument, caractérisé à ce qu'on donne à l'écart entre les deux zones une valeur proportionelle à la fréquence spatiale pour laquelle doit être effectuée la mesure, on détermine également l'écartement des franges et on déduit, de l'écartement et de la position des franges pour plusieurs couples de deux zones distinctes, la fonction de transfert par intégration des mesures pour des couples de zones correspondant à l'ensemble de la surface de la pupille. Le balayage de l'ensemble de la pupille de l'instrument s'effectue en déplaçant un élément optique. Les zones constituant des sources secondaires peuvent être générées par un réseau.

Lorsque la fonction de transfert doit être déterminée pour un instrument devant fonctionner en lumière polychromatique, il suffit d'effectuer des mesures pour plusieurs fréquences spatiales en donnant chaque fois à l'écart entre les deux zones la valeur correspondante et de mesurer la fonction de transfert par intégration en faisant également intervenir la longueur d'onde en tant que variable.

L'invention propose également un dispositif permettant de mettre en oeuvre le procédé ci-dessus défini, comprenant une source spatialement cohérente, des moyens destinés à découper deux zones distinctes dans la pupille d'entrée de l'instrument à étudier à partir du faisceau fourni par la source, et des moyens d'analyse des franges formées dans le plan image de l'instrument placé derrière lesdits moyens, caractérisé en ce que lesdits moyens donnent aux deux zones un écart proportionnel à la fréquence spatiale de travail et en ce que le dispositif comprend de plus des moyens de calcul permettant de déterminer également l'écartement des franges et de déduire, de l'écartement et de la position des franges pour plusieurs couples de deux zones distinctes, la fonction de transfert par intégration des mesures pour des couples de zones correspondant à l'ensemble de la surface de la pupille.

L'invention sera mieux comprise à la lecture de la description qui suit d'un mode particulier d'exécution, donné à titre d'exemple non liminatif. La description se réfère aux dessins qui l'accompagnent, dans lesquels:

— la figure 1, déjà mentionnée, est un schéma du montage de Cotton,

— la figure 2 est un schéma d'un dispositif permettant de mettre en oeuvre l'invention,

— la figure 3 est une vue partielle montrant une variante du dispositif de la figure 2.

Le dispositif de mise en oeuvre de l'invention dont le schéma optique est donné en figure 2 comprend, comme celui de la figure 1, une source spatialement cohérente 10, ce qui impose pratiquement qu'elle soit quasi ponctuelle. Le faisceau de sortie de la source est transformé en un faisceau parallèle par un condenseur 20 et envoyé sur un réseau de diffraction 22. Ce réseau de diffraction fixe les fréquences spatiales μ et ν dans l'espace objet (inverses du pas dans les directions x et y). Si le grandissement de l'ensemble du système est égal à 1, ce qui est un cas fréquent, on verra que les fréquences spatiales μ et ν du réseau doivent être égales à la moitié des fréquences spatiales r et s pour lesquelles doit se faire la mesure, ramenées à l'éspace où se trouve le réseau (espace objet). On voit qu'on peut modifier la fréquence spatiale avec un même réseau, simplement en agissant sur le système optique.

Le faisceau de sortie avec un filtre spatial 26 destiné à éliminer l'ordre 0 de diffraction. Dans la pratique, ce filtre spatial 26 sera constitué par une lentille placée dans le plan du spectre de Fourir du réseau, présentant un masque central 28 occultant l'ordre 0. Les ordres supérieurs sont éliminés du fait de l'ouverture limitée du filtre, et les ordres restants autres que + 1 et −1 peuvent être éliminés par le calcul, comme on le verra plus loin.

L'image du plan spectral est reformée par une lentille de champ 30 dans la pupille d'entrée 15 de l'instrument à tester 14. Cette lentille de champ n'est pas indispensable, mais elle permet d'améliorer le montage optique.

On voit que le système ainsi constitué se rapproche d'un montage à double diffraction.

Enfin, l'instrument à étudier reforme une image 34 dans le plan d'observation d'un analyseur 32. Si l'instrument est tel qu'il ne forme pas d'image réelle, il sera suivi d'une optique auxiliaire, et la fonction de transfert qui sera déterminée fera intervenir à la fois l'instrument et l'optique auxiliaire.

L'analyseur 32 peut être de l'un quelconque des types bien connus: il peut s'agir d'une caméra classique, d'une caméra à dispositif à transfert de charges, d'un appareil à balayage, voire même d'un appareil photographique, dans le cas d'une exploitation hors ligne. Le seul impératif est que l'appareil d'analyse permette de déterminer la position des franges dans le plan image et la modulation de ces franges (c'est-à-dire la différence entre le niveau de blanc et le niveau de noir).

Dans un tel apareil, la fonction de transfert peut être déduite des mesures effectuées par l'analyseur 32 sur l'image finale 34 du réseau à travers l'instrument 14 au moyen de l'intégrale de Duffieux:

$$FTO(r, s) = \frac{\iint a(x + \frac{r\lambda f}{2}, y + \frac{s\lambda f}{2})\, a^*(x - \frac{r\lambda f}{2}, y - \frac{s\lambda f}{2})\, dx\, dy}{\iint |a(x, y)|^2\, dx\, dy} \qquad (1)$$

Dans cette formule:

$\lambda$ est la longueur d'onde de la lumière,

f est la distance de la pupille 15 de l'instrument à l'image du réseau, reprise par la lentille de champ,

a ($\lambda$, x, y) est la répartition d'amplitude sur la pupille, qui n'est plus fonction que de x et y en lumière monochromatique.

Pour tenir compte de la répartition spectrale de l'énergie dans le cas de lumière polychromatique, on effectuera une normalisation d'amplitude de telle sorte que l'on ait, quelle que soit la longueur d'onde $\lambda$:

$$\iint |a(\lambda, x, y)|^2\, dx\, dy = 1 \qquad (2)$$

Chaque longueur d'onde est pondérée par une distribution, au sens mathématique, $W(\lambda)$ dont l'intégrale sur le spectre est limitée.

On peut dans ces conditions définir pour chaque longueur d'onde une fonction de transfert optique FTO (r, s, $\lambda$). La fonction de transfert polychromatique prend alors, pour l'ensemble du spectre de travail de l'instrument, la valeur:

$$FTO(r, s) = \int W(\lambda) \cdot FTO(r, s, \lambda)\, d\lambda \qquad (3)$$

La transposition de l'intégrale de Duffieux (1) en tenant compte des hypothèses ci-dessus conduit à:

$$FTO(r, s) = \iiint w(\lambda) \cdot a(\lambda, x + \frac{r\lambda f}{2}, y + \frac{s\lambda f}{2})$$

$$a^*(\lambda, x - \frac{r\lambda f}{2}, y - \frac{s\lambda f}{2})\, dx\, dy\, d\lambda \qquad (4)$$

On montrera maintenant comment la conception de base découlant de la formule (4) peut être appliquée dans un dispositif tel que celui montré en figure 2.

Dans ce dispositif, l'ensemble constitué par la source 10, le condenseur 20, le réseau 22, la lentille 24 et le filtre spatial 26 constitue un générateur de couples de sources secondaires mutuellement cohérentes assimilables à des zones découpées dans le plan de la pupille 15. Ce générateur fournit autant de couples de sources secondaires (correspondant aux ouvertures dans le montage de la figur 1) qu'il y a de longueurs d'onde présentes dans le spectre, et dans chaque couple les sources sont mutuellement cohérentes. La position d'ensemble des couples est modifiable à volonté, par déplacement du générateur et/ou de la lentille de champ 30.

Arrivé à ce stade, il est nécessaire, pour expliquer d'invention, d'avoir recours à des considérations théoriques.

Si on éclaire en lumière collimatée de longueur

d'onde $\lambda$ un réseau dont la fréquence spatiale est $\mu$ suivant la direction x, $\nu$ suivant la direction orthogonale y, on observa, pour un angle d'ouverture faible ayant des composantes 8x en azimut. 8y en site, des pics de diffraction définis par les angles 8'x et 8'y:

$$8'x \simeq 8x + k\,\lambda\mu$$
$$8'y \simeq 8y + k\,\lambda\nu \qquad (5)$$

où k est un entier.

Le dispositif montré en figure 2 permet d'éliminer l'ordre 0. Dans ces conditions, on obtient, à partir de l'image du réseau 22, des pics (si le grandissement de l'image du réseau est égal à 1) qui sont orientés dans les directions définies par les angles 8''x et 8''y:

$$8''x \simeq 8x + k\,\lambda\mu$$
$$8''y \simeq 8y + k\,\lambda\nu \qquad (6)$$

où k est un entier différent de 1.

Les pics de diffraction vont être projetés, dans le plan de la pupille 15, de part et d'autre du point où se formerait l'image du pic d'ordre 0. Ces pics seront respectivement décalés de $(\mu\lambda f, \nu\lambda f)$ et $(-\mu\lambda f, -\nu\lambda f)$ pour les ordres $+1$ et $-1$.

Il suffit donc de choisir $\mu = r/2$ et $\nu = s/2$ pour obtenir, pour chaque longueur d'onde $\lambda$ à étudier, le couple de sources secondaires approprié. L'ensemble de la pupille peut être balayé en déplaçant la source primaire 10 ou la lentille de champ, par exemple en déplaçant la source sur une table à mouvements croisés, fournissant les coordonnées de la source d'où x et y se déduisent directement par le calcul.

On pourra ainsi effectuer des mesures pour toute une série de positions (x, y) du centre des sources secondaires dans le plan de la pupille 15.

L'analyseur 32 doit être d'un type permettant de réaliser des mesures de longueur et d'intensité lumineuse et un comptage de franges. On sait qu'il existe déjà de nombreux analyseurs remplissant ces fonctions. L'analyseur est associé à un organe de calcul 36, avantageusement programmé pour réaliser une transformée de Fourier sur les données obtenues (FTR en général). Ainsi, des mesures on déduit aisément l'intensité moyenne I pour tout l'ensemble du spectre concerné:

$$I(x, y, \lambda, r, s) =$$

$$\left|a\!\left(\lambda, \frac{x+r\lambda f}{2}, \frac{y+s\lambda f}{2}\right)\right|^2 + \left|a\!\left(\lambda, \frac{x-r\lambda f}{2}, \frac{y-r\lambda f}{2}\right)\right|^2 \quad (7)$$

et la loi de variation sinusoïdale autour de la valeur moyenne:

$$I(x, y, \lambda, r, s)\cdot M(x, y, \lambda, r, s)\cos$$

$$[\varphi_G - \varphi_D + 2\pi(rX + sY)] \qquad (8)$$

Dans cette dernière formule, X et Y sont les coordonnées dans le plan image.

$\varphi_D$ et $\varphi_G$ sont les arguments respectifs de

$$a\!\left(\lambda, \frac{x+r\lambda f}{2}, \frac{y+s\lambda f}{2}\right) \text{ et } a\!\left(\lambda, \frac{x-r\lambda f}{2}, \frac{y-s\lambda f}{2}\right),$$

la modulation M étant elle-même définie par la relation:

$$I(x, y, \lambda, r, s)\cdot M(x, y, \lambda, r, s) =$$

$$2\left|a\!\left(\lambda, \frac{x+r\lambda f}{2}, \frac{y+s\lambda f}{2}\right)\right| \left|a\!\left(\lambda, \frac{x-r\lambda f}{2}, \frac{y-s\lambda f}{2}\right)\right| \quad (9)$$

Dans ces conditions, l'éclairement E (X, Y) dans le plan image, pour l'ensemble du spectre concerné, s'écrira:

$$E(X, Y) = \int W(\lambda)\cdot I(x, y, \lambda, r, s)\,d\lambda + \int W(\lambda)\cdot$$

$$I(x, y, \lambda, r, s)\cdot M(x, y, \lambda, r, s)\cos[\varphi_G - \varphi_D +$$

$$2\pi(rX + sY)]\,d\lambda \qquad (10)$$

Le premier terme du second membre de cette formule représente la composante invariante avec X, Y, qu'on désignera par B(x, y, r, s). On peut alors définir m(x, y, r, s) et $\varphi$(x, y, r, s) par:

$$\int W(\lambda)\cdot I(x, y, \lambda, r, s)\cdot M(x, y, \lambda, r, s) \frac{\cos(\varphi_G - \varphi_D)}{\sin(\varphi_G - \varphi_D)}\,d\lambda =$$

$$B(x, y, r, s)\cdot m(x, y, r, s) \frac{\cos\varphi}{\sin\varphi} \qquad (11)$$

ce qui permet d'écrire l'éclairement E (formule 10) sous la forme simplifiée:

$$E(X, Y) = B(x, y, r, s)\{1 + m(x, y, r, s)\cos$$

$$[2\pi(rX + sY) + \varphi]\} \qquad (12)$$

avec, au centre $(X_o, Y_o)$ du phénomène d'interférences:

$$\varphi + 2\pi(rX_o + sY_o) = 0 \qquad (13)$$

Pour chaque fréquence spatiale à tester (r, s) donnée, l'ensemble des valeurs déduites des mesurées de

B(x, y, r, s)　composante invariante avec X et Y
m(x, y, r, s)　modulation du système de franges
$X_o$ et $Y_o$　　permettant l'accès à $\varphi = -2\pi[rX_o + sY_o]$

peuvent être mémorisées afin de constituer une base de données permettant le calcul d'un paramètre de qualité optique, et notamment de la fonction de transfert optique.

Le calcul de la fonction de transfert optique peut s'effectuer en séparant le module et la phase de l'amplitude complexe dans la pupille pour écrire:

$$FTO(r, s) = \int\!\!\int\!\!\int W(\lambda)\left|a\!\left(\lambda, \frac{x+r\lambda f}{2}, \frac{y+s\lambda f}{2}\right)\right|$$

$$\left|a\!\left(\lambda, \frac{x-r\lambda f}{2}, \frac{y-s\lambda f}{2}\right)\right| \exp i(\varphi_D - \varphi_G)\,dx\,dy\,d\lambda \quad (14)$$

L'analyse des franges d'interférences, avec un grandissement égal à 1, a fait apparaître la formule (9).

Si on peut donc calculer d'abord l'intégrale en $\lambda$ de (14) en reprenant les notations de la formule (9), on a

$1/2 \int W(\lambda) \cdot I(x, y, \lambda, r, s) \, M(x, y, \lambda, r, s)$

$\exp [i(\varphi_D - \varphi_G)] d\lambda$

qui vaut:

$1/2 \, B(x, y, r, s) \cdot M(x, y, r, s) \exp(-i\varphi).$

L'analyse des franges (formule 13) a montré que:

$\varphi = 2\pi (rX_o + sY_o).$

On peut donc récrire la fonction sous la forme:

$FTO(r, s) = 1/2 \iint B(x, y, r, s) \, m(x, y, r, s)$

$\exp [2\pi i (rX_o + sY_o)] \, dx \, dy$

qui est calculable à partir des données expérimentales numérisées identifiées plus haut.

On peut naturellement effectuer d'autres déterminations que celle de la fonction de transfert optique, par exemple celle d'un facteur de qualité.

On a vu plus haut que le filtre spatial constiué par la lentille 26 et le masque 28 permettait d'éliminer des ordres supérieurs. Mais dans certains cas, le spectre a une étendue telle qu'il n'est pas possible d'éliminer certains ordres supérieurs pour certains longueurs d'onde, car ils présentent un recouvrement avec les ordres +1 et −1 pour d'autres longueurs d'onde.

Ces ordres supérieurs intempestifs peuvent être éliminés soit au niveau de l'analyseur, par exemple en effectuant un filtrage électronique de l'image détectée par un récepteur. En effect, les fréquences données par ces ordres supérieurs sont différentes de la fréquence utile. On peut également effectuer d'élimination au niveau du calcul lui-même.

L'invention est suspectible de nombreuses modifications. Elle peut naturellement s'appliquer au cas d'une source monochromatique, qui rend inutile l'emploi d'un réseau 22. Ce dernier peut alors être remplacé par un simple diaphragme à deux ouvertures. Une variante particulièrement utile dans le cas d'un instrument dont les dimensions rendent difficile la mesure de la fonction de transfert, par suite des dimensions importantes du générateur d'objet qui seraient nécessaires, consiste à faire un montage en auto-collimation. La figure 3, (où les éléments correspondant à ceux déjà montrés en figure 2 portent le même numéro de référence) montre une telle disposition. Un miroir 38 placé derrière l'instrument permet de renvoyer vers celui-ci la lumière transmise. Une lame semi-transparente 40 permet de renvoyer une fraction de l'intensité du faisceau vers l'analyseur 32. Ce montage double évidemment les écarts aberrants, ce qui conduira à diviser par deux les valeurs mesurées pour $X_o$ et $Y_o$.

## Revendications

1. Procédé de mesure de la qualité optique d'un instrument (14) et notamment de sa fonction de transfert optique, suivant lequel on découpe dans la pupille d'entrée (15) de l'instrument (14) deux zones distinctes, et on mesure la position des franges dans l'image fournie par l'instrument, caractérisé à ce qu'on donne à l'écart entre les deux zones une valeur proportionnelle à la fréquence spatiale pour laquelle doit être effectuée la mesure, on mesure également l'écartement des franges et leur modulation et on déduit, de l'écartement, de la position et de la modulation des franges pour plusieurs couples de deux zones distinctes, la fonction de transfert, par intégration des mesures pour des couples de zones correspondant à l'ensemble de la surface de la pupille.

2. Procédé selon la revendication 1, caractérisé en ce que l'on effectue des mesures pour plusieurs fréquences spatiales, en donnant chaque fois à l'écart entre les deux zones la valeur correspondante et en ce que l'on mesure la fonction de transfert par intégration faisant également invervenir la longueur d'onde en tant que variable.

3. Procédé selon la revendication 1 ou 2, caractérisé en ce qu'on élimine les fréquences parasites, causées par les ordres supérieurs de diffraction, au cours du calcul de la fonction de transfert.

4. Dispositif de mesure de la qualité optique d'un instrument (14), et notamment de sa fonction de transfert, comprenant une source (10) de lumière spatialement cohérente, des moyens (22, 26, 28) destinés à découper deux zones distinctes dans la pupille d'entrée (15) de l'instrument (14) à étudier à partir du faisceau de lumière fourni par la source, et des moyens (32) d'analyse des franges formées dans le plan image de l'instrument, caractérisé en ce que lesdits moyens (22, 26, 28) donnent aux deux zones un écart proportionnel à la fréquence spatiale de travail et en ce que le dispositif comprend de plus des moyens de mesure (32) permettant de déterminer également l'écartement des franges et des moyens de calcul (36) de la fonction de transfert, par intégration à partir de mesures de l'écartement et de la position des franges pour plusieurs couples de deux zones distinctes, correspondant à l'ensemble de la surface de la pupille (15).

5. Dispositif selon la revendication 4, caractérisé en ce que lesdits moyens pour découper deux zones comprennent un réseau (22), une optique (24) de formation d'image et un filtre (26, 28) spatial d'élimination de l'ordre zéro de diffraction.

6. Dispositif selon la revendication 4 ou 5, caractérisé en ce que les moyens de mesure (32) sont prévus pour éliminer les ordres supérieurs de diffraction par filtrage de fréquence.

7. Dispositif selon la revendication 4, 5 ou 6, caractérisé par des moyens permettant de déplacer la source (10) dans un plan orthogonal à l'axe optique du dispositif et de mesurer les déplacements en coordonnées orthogonales.

8. Dispositif selon l'une quelconque des revendications 4 à 7, caractérisé en ce que les moyens de calcul (36) sont prévus pour déterminer la transformée de Fourier des mesures effectuées.

9. Dispositif selon l'une quelconque des revendications 4, à 8, caractérisé en ce qu'il comporte un miroir de repliement (38) permettant au dispositif de fonctionner en auto-collimation.

## Patentansprüche

1. Verfahren zum Messen der optischen Qualität eines Instrumentes (14), insbesondere seiner optischen Übertragungsfunktion, nach welchem man in einer Eintrittspupille (15) des Instrumentes (14) zwei unterschiedliche Zonen aufspaltet und man die Position von Streifen in dem durch das Instrument gelieferten Bild misst, dadurch gekennzeichnet, dass man dem Abstand zwischen den zwei Zonen einen der räumlichen Frequenz, für die die Messung ausgeführt wird, proportionalen Wert gibt, dass man gleichzeitig den Abstand der Streifen und ihre Modulation misst und dass man vom Abstand, von der Position und der Modulation der Streifen für mehrere Paare von zwei unterschiedlichen Zonen die Übertragungsfunktion durch Integration der Messungen für Paare von mit der gesamten Oberfläche der Linse übereinstimmenden Zonen abzieht.

2. Verfahren nach Anspruch 1, dadurch gekennzeichnet, dass man die Messungen für mehrere räumliche Frequenzen ausführt, wobei man jedesmal dem Abstand zwischen den zwei Zonen den entsprechenden Wert gibt, und dass man die Übertragungsfunktion durch Integration misst, wobei man gleichzeitig die Wellenlänge als Variable verändert.

3. Verfahren nach Anspruch 1 oder 2, dadurch gekennzeichnet, dass man die durch die oberen Ordnungen einer Beugung verursachten Störfrequenzen während der Berechnung der Übertragungsfunktion beseitigt.

4. Vorrichtung zum Messen der optischen Qualität eines Elementes (14), insbesondere seiner Übertragungsfunktion, mit einer räumlich kohärenten Lichtquelle (10), mit Mitteln (22, 26, 28) zum Aufspalten von zwei unterschiedlichen Zonen in der Eintrittspupille (15) des Instruments (14) zum Auslegen des von der Quelle gelieferten austretenden Lichtbündels und mit Mitteln (32) zur Analyse von in der Bildebene des Instrumentes gebildeten Streifen, dadurch gekennzeichnet, dass die Mittel (22, 26, 28) den zwei Zonen einen der räumlichen Arbeitsfrequenz proportionalen Abstand geben, und dass die Vorrichtung mehrere Mittel (32) zum Messen, die es ermöglichen, gleichzeitig den Abstand der Streifen zu bestimmen, und Mittel (36) zur Berechnung der Übertragungsfunktion aufweist, um durch Integration von den Ausgangsmesswerten und der Position der Streifen für mehrere Paare von zwei unterschiedlichen Zonen auszugehen, welche mit der gesamten Oberfläche der Pupille (15) übereinstimmen.

5. Vorrichtung nach Anspruch 4, dadurch gekennzeichnet, dass die Mittel zur Aufspaltung zweier Zonen ein Gitter (22), eine Optik (24) zur Bildung eines Bildes und ein räumliches Filter (26, 28) zur Beseitigung der nullten Ordnung einer Beugung aufweisen.

6. Vorrichtung nach Anspruch 4 oder 5, dadurch gekennzeichnet, dass die Messungsmittel (32) zur Beseitigung der oberen Ordnungen einer Beugung durch Frequenzfiltration vorgesehen sind.

7. Vorrichtung nach Anspruch 4, 5 oder 6, gekennzeichnet durch Mittel, welche beim Verschieben der Quelle (10) in einer Ebene senkrecht zur optischen Achse der Vorrichtung und ein Messen der Verschiebungen in rechtwinkligen Koordinaten ermöglichen.

8. Vorrichtung nach einem der Ansprüche 4 bis 7, dadurch gekennzeichnet, dass die Mittel (36) zur Berechnung der Fourier-transformierten der ausgeführten Messwerte vorgesehen sind.

9. Vorrichtung nach einem der Ansprüche 4 bis 8, dadurch gekennzeichnet, dass diese einen Spiegel (38) zur Abkapselung aufweist, welcher eine Selbstausrichtung der Vorrichtung ermöglicht.

## Claims

1. Method of measuring the optical quality of an instrument (14) and particularly of its optical transfer function, wherein two separate zones are isolated in the input pupil (15) of the instrument (14) and the position of fringes, in the image delivered by the instrument is measured, characterized in that the spacing between the two zones is given a value which is in direct proportion to the spatial frequency for which the measure should be carried out, the distance between the fringes is also measured and the value of the transfer function is derived from the spacing, the position and the modulation of the fringes for a plurality of couples of two separate zones, by integrating the measurements for couples of zones corresponding to the whole of the area of the input pupil.

2. Method according to Claim 1, characterized in that measurements are carried out for a plurality of spatial freqencies, each measurement being made with a respective value of the spacing between the two zones and in that the transfer function is measured by integration while using the wavelength as an additional variable.

3. Method according to Claim 1 or 2, characterized in that parasitic spatial frequencies due to the higher orders of diffraction are eliminated during computation of the transfer function.

4. Device for measuring the optical quality of an instrument (14), particularly of its transfer function, comprising a source (10) of spatially coherent light, means (22, 26, 28) for isolating two separate zones in the input pupil (15) of the instrument (14) to be studied from the light beam delivered by the source, and means (32) for analysing the fringes formed in the image plane of the instrument, characterized in that said means (22, 26, 28) set the spacing between the two zones at a value which is in direct proportion with the spatial frequency of operation and in that the device further comprises measuring means (32) for also measuring the distance between the fringes and means (36) for computing the transfer function by integration starting from measurements of the distance between the franges and the position of the fringes for a plurality of couples of two separate zones, corresponding to the whole of the surface of the pupil (15).

5. Device according to Claim 4, characterized in that said means for isolating two zones comprises a grating (22), optical means (24) for forming an image and a spatial filter (26, 28) for suppressing the zero order of diffraction.

6. Device according to Claim 4 or 5, characterized in that the measuring means (32) are arranged for suppressing the higher diffraction orders by frequency filtering.

7. Device according to Claim 4, 5 or 6, characterized by means for moving the source (10) in a plane which is orthogonal to the optical axis of the device and for measuring the amounts of movement along two orthogonal coordinate directions.

8. Device according to any one of claims 4 to 7, characterized in that the computing means (36) are arranged for computing the Fourier transform of the measurements which are carried out.

9. Device according to any one of Claims 4-8, characterized in that it comprises a folding back mirror (38) whereby the device may operate as a self-collimating unit.

FIG.1.

FIG.2.

FIG.3.

EP 0 209 457 B1